Europäisches Patentamt

European Patent Office

Office européen des brevets

Publication number: **0 283 599**

**A1**

## EUROPEAN PATENT APPLICATION

Application number: 87302451.7

Date of filing: **23.03.87**

Int. Cl.⁴ **G01S 13/20** , G01S 13/22 , G01S 13/70

The title of the invention has been amended (Guidelines for Examination in the EPO. A-III. 7.3).

Date of publication of application: **28.09.88 Bulletin 88/39**

Designated Contracting States: **AT BE CH DE ES FR GB GR IT LI LU NL SE**

Applicant: **PLESSEY OVERSEAS LIMITED
Vicarage Lane
Ilford Essex IGI 4AQ(GB)**

Inventor: **Hurd, David Lee
1A The Drift
Rowlands Castle Hants(GB)**

Representative: **Johnson, Reginald George
The Plessey Company plc Intellectual
Property Department Vicarage Lane
Ilford Essex IG1 4AQ(GB)**

Radar system for discriminating between first and multi-time around echos.

A radar system for determining first time around targets from multiple time around targets using two radar pulse trains of different pulse repetition intervals (31) and thresholding means (35). Echos from pulses at each pulse repetition interval being compared (37) to determine first time around targets from subsequent time around targets. The radar system using thresholding levels to determine an echo and being less prone to problems of coincidence gate clashing with high duty cycles.

FIG. 4

EP 0 283 599 A1

## RADAR SYSTEM

The present invention relates to a Radar System and more particularly to such a system having means for discriminating between first and multi-time around targets.

Defence system intended to destroy incoming hostile targets may comprise a radar location system and an attack system such as missiles or guns. It is known that the range of the attack system may be limited or the effectiveness reduced with range, consequently it maybe desirable to deal with the incoming target only when that target is within a specific range sphere. Thus the radar system used will have a pulse repetition interval determined by this range.

Hostile targets outside the proposed range sphere may also be detected and a problem arises when a first time around targets i.e. within the range sphere and a second or subsequent time around target i.e. outside the range sphere differ in range by an amount such that the delay between the echo pulses received from the different targets is a multiple of the radar systems pulse repetition interval. In such a case echo pulses from different targets arrive at the radar receiver simultaneously.

A known method of relieving the multiple time around target problem is to transmit pulse trains having different pulse repetition intervals. The delay between the different echo pulses received provides a means of distinguishing the targets. This method however becomes inaccurate when a high duty cycle is used particularly when the transmitted pulse length is significant compared to the pulse repetition interval. When this occurs echo pulses received from the different pulse trains overlap and it may be impossible to distinguish which echo pulse has been received from which target.

It is an objective of the present invention to provide a radar system which can more clearly distinguish first and multiple time around targets.

In accordance with the present invention there is provided a radar system for discriminating between first and multi-time around targets comprising transmitting means for transmitting pulse trains of different pulse repetition interval and receiving means for receiving the resultant echo pulse trains from targets within range wherein circuit means is provided for comparing the amplitudes of echo pulses from different echo pulse trains having different pulse repetition intervals which are received by the receiving means and for providing an output signal indicative of whether the echo pulses have been received from a first or multi-time around target.

The radar system may comprise:-

(i) Pulsed radar providing pulses of at least two pulse reptition intervals;

(ii) Threshold testing means for received echo pulse and providing an alarm output when an echo is detected.

(iii) Amplitude comparison means to compare the echo pulse amplitude received at each pulse repetition interval whereby first or multi-time around targets can be distinguished and giving an output signal indicative thereof:

(iv) Means for signal processing output signals from the threshold testing means and amplitude comparison means whereupon an alarm is raised or not.

Preferably, the system includes tracking means such that the movement of multi-time around targets is appreciated and these targets are not confused as first time around targets at false target positions.

Time-out facilities may be added to the system such that the status of multi-time around targets may be redetermined as they approach the radar site.

The radar system may include pulse thresholding means or logic elements or have radar pulses fed in tandem to different parts of the circuit or any combination of these elements.

In accordance with one embodiment of the present invention there is provided a radar system to discrimate between first and multi-time around targets comprising radar transmission and receiving means which have pulse trains of at least two different pulse repetition intervals, the respective different pulse repetition ratio being arranged to ensure pulse coincidence over a predetermined number of cycles such that pulses are distinguishable in pulse thresholding means, amplitude testing means and logic elements, the radar pulses received from a target being fed in tandem to both the thresholding means providing an alarm enabling signal to the logic element when a pulse is detected, the amplitude testing means comparing the amplitude of the pulses at the different pulse repetition intervals and providing a further signal to the logic element allowing a passage of the alarm enabling signal to an alarm device indicating a first around target if the amplitudes are substantially equal and providing a signal to inhibit the alarm enabling signal when the amplitudes are different.

An embodiment of the present invention will now be described by way of example only with reference to the accompanying drawings in which:-

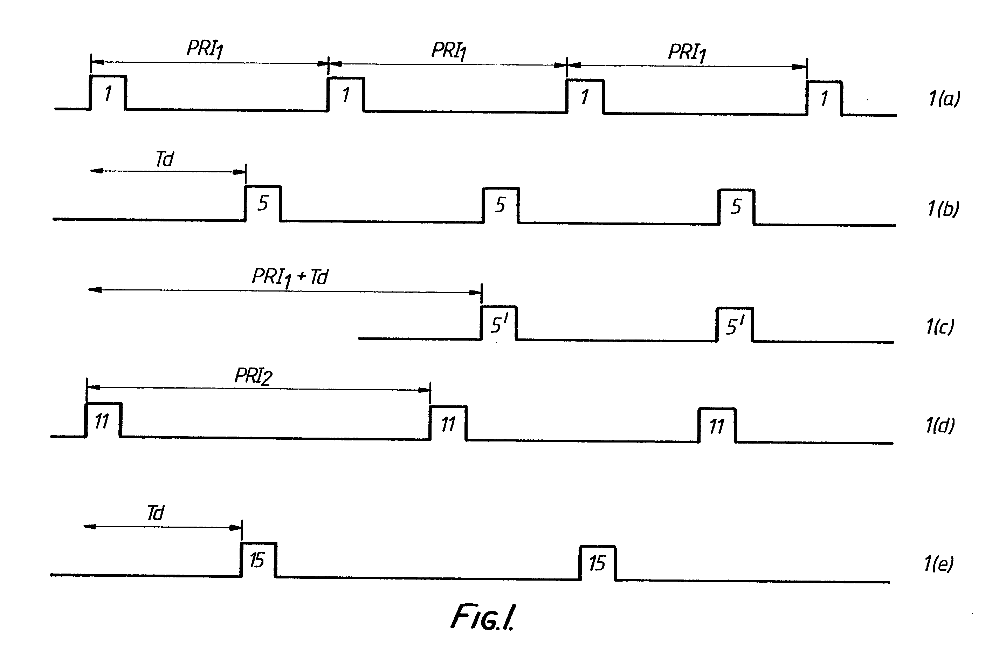

Figure 1(a) illustrates transmitted pulses from a radar system having a relatively light duty cycle and a pulse repetition interval (PRI$_1$);

Figure 1(b) shows received echo pulses from a first time around target reflected from transmitted pulses as illustrated in figure 1(a);

Figure 1(c) shows received echo pulses from a second time around target reflected from transmitted pulses as illustrated in figure 1(a);

Figure 1(d) illustrates transmitted pulses from a radar system having a pulse repetition interval (PRI$_2$);

Figure 1(a) shows received echo pulses from a first time around target reflected from transmitted pulses as shown in figure 1(d);

Figure 2(a) illustrates transmitted pulses from a radar system having a relatively high duty cycle and a pulse repetition interval (PRI$_3$);

Figure 2(b) shows received echo pulses from a first time around target reflected from transmitted pulses as illustrated in figure 2(a);

Figure 2(c) shows received echo pulses from a second time around target reflected from transmitted pulse as illustrated in figure 2(a);

Figure 2(d) shows transmitted pulses from a radar system having a relatively high duty cycle and a pulse repetition interval (PRI$_4$);

Figure 2(e) illustrates echo pulses received from a first time around target from transmitted pulses as illustrated in figure 2(d).;

Figure 3 illustrates a typical echo pulse response train received from a radar system according to the present invention; and,

4 shows in a systematic manner an arrangement of functional components according to the present invention.

Consider figures 1(a-f), in figure 1(a) a train of transmitted pulses 1 is shown with a first pulse repetition interval PRI$_1$. Figure 1(b) shows a train of received pulses 5 from a target with a delay Td indicative of the range to that target, the delay Td is less than the pulse repetition interval which may be considered a definition of a first time around target. Figure 1(c) shows a second-time around pulse train i.e. echo pulses 5' from a target are received at the receiver from a target with delay equal to n PRI$_1$ + Td where n is an integer, which is confused with a first time around echo pulse from a subsequent transmitted pulse 1. It is not possible to distinguish first-time around target echoes 5 from multi-time around target echoes 5' on the basis of a measurement of the delay time alone when using a single pulse repetition interval PRI$_1$. In figure 1(d) a second transmitted pulse train 11 is shown with a second different repetition interval PRI$_2$ and figure 1(e) illustrates the resulting echo pulse train 15 although the delay Td is the same with both pulse repetition intervals PRI$_1$ and PRI$_2$ the received pulses 5 and 15 can be distinguished from multiple time around target echoes such as 5' i.e. compare figures 1(c) and 1 (e) it can be seen that pulses 5 and 15 do not occur in the same time slot and thus these pulses are distinguishable by the receiver.

Echo pulses 5' from the second time around target with transmitted pulse of PRI$_1$ are no longer received at the same time as echo pulses 15 from first time around targets of transmitted pulse PRI$_2$. The range ambiguity is said to be resolved.

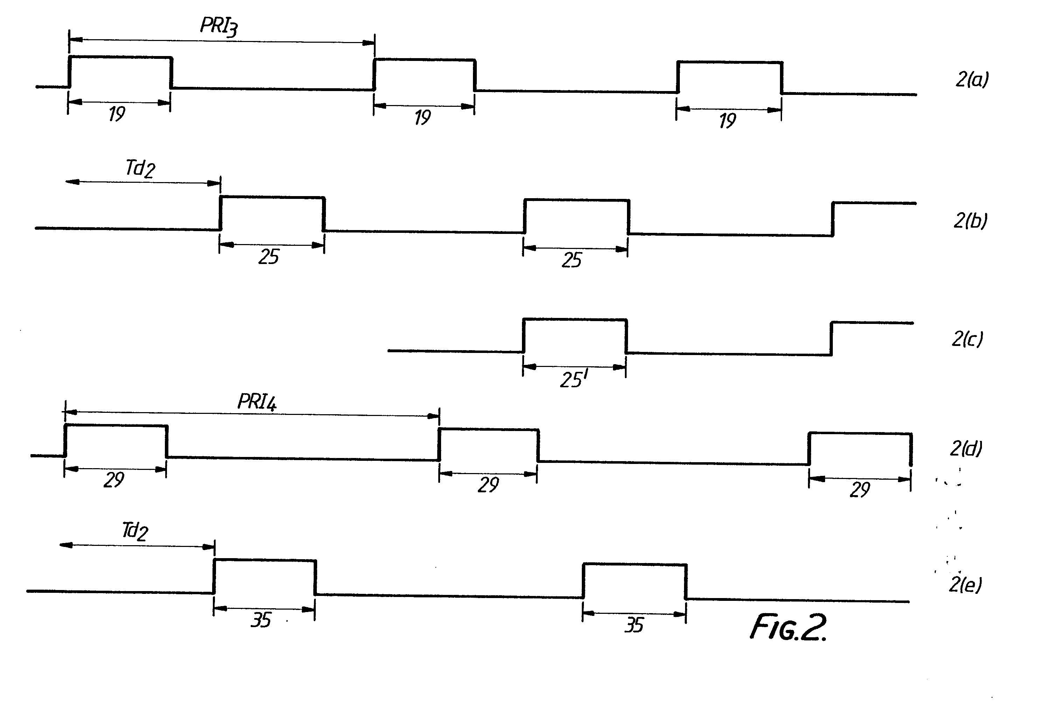

Figures 2(a) and 2 (d) illustrate two transmitted pulse trains with pulse repetition intervals PRI$_3$ and PRI$_4$ as shown and a target delay Td$_2$ but with a high duty cycle i.e. the pulse length 19 constituting a significant proportion of the pulse repetition interval PRI$_3$ or PRI$_4$. Figures 2(a-e) correspond with figures 1(a-e) however figures 2(c) and 2(e) illustrate an overlap of echo pulses 25, (2nd time around echo pulse of transmitted pulse PRI$_2$) and 35 (1st time around echo pulse with transmitted pulse of PRI$_4$) consequently first and mult-time around targets cannot be distinguished. In order to appreciate this, it should be borne in mind that the radar receiver is 'opened' for the duration of the pulse 25 or 35$^1$, each time a pulse from a certain delay is expected. For example, the radar receiver could be opened and closed following a pattern of figure 2(b), in which case thereceiver is said to have a range gate at delay Td$_2$. Because of the way in which the receiver operates, it is clear that if pulse trains from two targets overlap at all, even though they are not coincident, then both will appear in the same range gate.

Transmitted technology has established a limit to peak power therefore in order to get sufficient average power for the required sensitivity, a high duty cycle is necessary. Also as the received signal power drops off rapidly with range, it is important to discriminate targets in the first few multi-time around range gates.

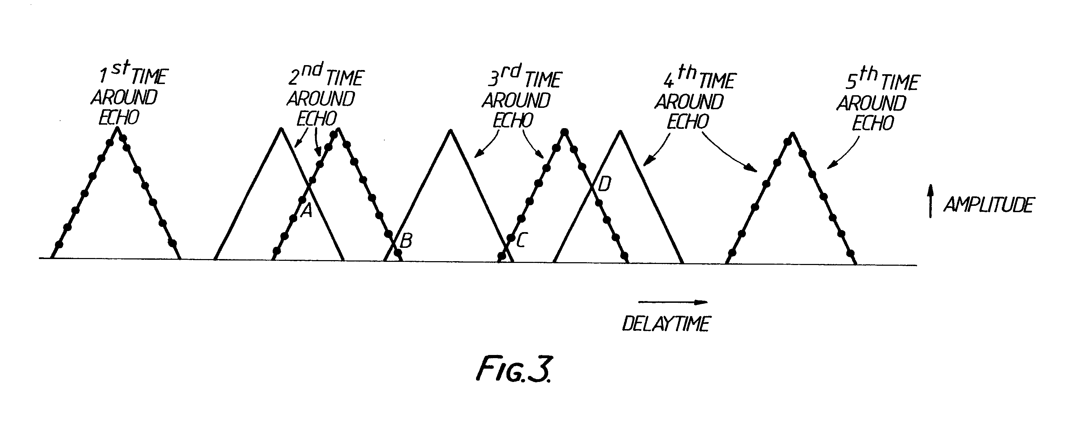

Now consider figure 3 here two echo pulse trains from transmitted pulse trains of different pulse repetition interval are superimposed. The fractional overlap of the receivers range gate by the pulse train from target delay is also shown, this is a measurement of the amplitude of the signal in the receiver. (No account has been taken of inverse square law attenuation with distance.) In figure 3 it can be seen that the two pulse trains shown with different pulse repetition intervals such as PRI$_1$ and PRI$_2$ coincide after 3 and 4 pulse repetition intervals respectively, the coice of this coincide relation is important in providing sufficient contrast to allow identification of multi-time around targets in the first few cycles.

It can be seen from figure 3 the relative amplitude at the two PRI's is the same for first-time around target echo and again when 4th time around echo of PRI$_1$ concides with 5th time around echo of PRI$_2$. In between these two, the relative amplitude is on the whole different except for a few points (A,B,C and D). The existence of these points is due to the high duty cycle. If the pulse length were reduced, then each of the triangles in figure 3 would narrow until there was no overlap at all.

In the present invention pulse amplitudes at the two PRI's are compared. If the pulse amplitudes are sufficiently similar the target is considered first time around. If not, the target is taken to be multi-time around.

Furthermore, once a multi-time around target is identified then this information is stored in a receiver memory to be used if and when the multi-time around target moves to a range where the relative amplitudes would indicate erroneously a first-time around target (i.e. close to the points A,B,C and D), the information in the receivers memory over-riding the indication of a first-time around target.

Targets are continuously tracked by the system so that even multi-time around targets first detected at ranges corresponding to points A,B,C and D are still identified even though it may take several cycles.

The technique is particularly appropriate to a pulse Doppler radar where the velocity of the target is effectively measured. If a target is identified as multi-time around then it can be tracked by monitoring its velocity. If a first-time around target appears with a different velocity at the same time as the tracked multi-time around target, then the former can be recognised. In other words the technique only overrides a detection for velocities very close to that of the tracked multi-time around target.

In comparing amplitudes between the two PRI's a threshold is set which prescribes a coincidence gate wherein if two amplitudes are within that gate they are considered to coincide and a first time around target indicated. The width of the coincidence gate is actually dependent on the sum of the amplitude. The threshold is determined so that the probability of a genuine first-time around target being erroneously categorised as multi-time around due to noise is acceptably low.

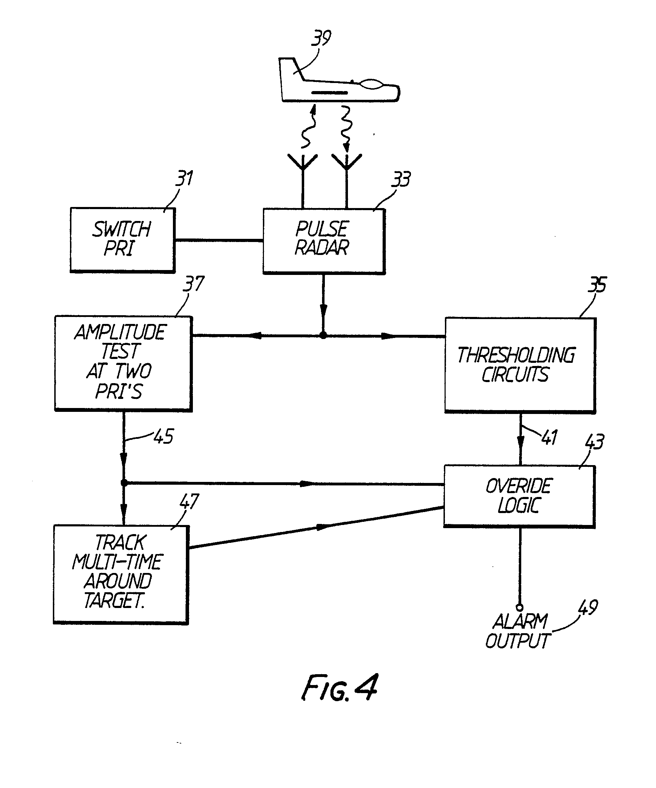

Figure 4 illustrates in a systematic manner a method of implementing the invention. Radar pulses are transmitted under control of a switch pulse repetition interval element 31 appended to a transmit/receiver means 33. A received echo pulse train from a target 39 is directed to conventional thresholding testing circuits 35 as found in present radar systems and to amplitude testing means 37 according to the invention. The threshold testing circuits 35 establish there is a response and thus that the target 39 is present, an alarm enabling signal 41 is sent to a logic element 43 when such a response a present. The amplitude testing means 37 analyse the received pulses at the two pulse repetition intervals identifying first and/or multi-time around targets and sending signals 45 to the logic element 43 and to a tracking device 47 determining whether the alarm enabling signal 41 from the threshold circuits 35 is passed to an alarm output device 49. The tracking device 47 track a multi-time around target such that even when it enters one of the "error" zones (i.e. A,B,C and D in figure 3) of the radar system it is still seen as a multi-time around target. It should be noted that there are advantages in providing "time-out" means in the tracking 47 and logic 43 devices so that the incoming target is re-assessed as it approaches and becomes increasingly dangerous.

The receiver type used in this radar system can be of any type although as shown in figure 3 a matched filter type is preferred due to its sharp echo pulse edges.

## Claims

1. A radar system for discriminating between first and multi-time around targets comprising transmitting means for transmitting pulse trains of different pulse repetition interval and receiving means for receiving the resultant echo pulse trains from targets within range wherein circuit means is provided for comparing the amplitudes of echo pulses from different echo pulse trains having different pulse repetition intervals which are received by the receiving means and for providing an output signal indicative of whether the echo pulses have been received from a first or multi-time around target.

2. A radar system for discriminating between first and multi-time around targets as claimed in claim 1 comprising the elements of:-

(i) A pulsed radar providing pulses of at least two pulse repetition intervals;

(ii) Threshold testing means for received echo pulse and providing an alarm output when an echo is detected.

(iii) Amplitude comparison means to compare the echo pulse amplitude received at each pulse repetition interval whereby first or multi-time around targets can be distinguished and giving an output signal indicative thereof;

(iv) Means for signal processing output signals from the threshold testing means and amplitude comparison means whereupon an alarm is raised or not.

3. A radar system as claimed in claims 1 or 2 wherein the system includes tracking means whereby in operation the movement of multi-time around targets is appreciated and these are not confused as first time around targets at false target positions.

4. A radar system as claimed in any preceeding claim wherein time-out facilities are added to the system whereby in operation the status of multi-time around targets are redetermined as they approach the radar site.

5. A radar system as claimed in any preceeding claim wherein the system includes pulse thresholding means.

6. A radar system as claimed in any preceeding claim wherein the radar pulse is fed in tandem to different logic elements in the system.

7. A radar system to discrimate between first and multi-time around targets comprising radar transmission and receiving means which have pulse trains of at least two different pulse repetition intervals, the respective different pulse repetition ratio being arranged to ensure pulse coincidence over a predetermined number of cycles such that pulses are distinguishable in pulse thresholding means, aplitude testing means and logic elements, the radar pulses received from a target being fed in tandem to both the thresholding means providing an alarm enabling signal to the logic element when a pulse is detected, the amplitude testing means comparing the amplitude of the pulses at the different pulse repetition intervals and providing a further signal to the logic element allowing the passage of the alarm enabling signal to an alarm device indicating a first around target if the amplitudes are substantially equal and providing a signal to inhibit the alarm enabling signal when the amplitudes are different.

8. A radar system as hereinbefore described with reference to the accompanying drawings.

Fig.1.

1(a)

1(b)

1(c)

1(d)

1(e)

0 283 599

PRI₃

19  19  19

2(a)

Td₂

25  25

2(b)

25'

2(c)

PRI₄

29  29  29

2(d)

Td₂

35  35

2(e)

FIG.2.

0 283 599

1st TIME AROUND ECHO 2nd TIME AROUND ECHO 3rd TIME AROUND ECHO 4th TIME AROUND ECHO 5th TIME AROUND ECHO

A   B   C   D

AMPLITUDE

DELAY TIME

FIG.3.

0 283 599

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 079 376 (J.C. KIRK)<br>* Abstract; column 6, line 50 - column 7, line 41; column 7, line 62 - column 8, line 54; figure 3 * | 1,2,5-8 | G 01 S 13/20<br>G 01 S 13/22<br>G 01 S 13/70 |
| A | | 3 | |
| Y | EP-A-0 126 032 (SELENIA)<br>* Abstract; page 3, lines 6-13; page 4, line 30 - page 5, line 7; figures 1,4 * | 1,2,5-8 | |
| A | US-A-3 765 017 (M.J. DENTINO)<br>* Column 3, line 45 - column 6, line 61; figures 1-7 * | 1,7 | |
| A | M.I. SKOLNIK: "Radar Handbook", 1970, pages 19-12 - 19-18, McGraw-Hill, Inc., New York, US<br>* Pages 19-12 - 19-18, paragraphs 19.3,19.4 * | 1-3,7 | |

TECHNICAL FIELDS
SEARCHED (Int. Cl.4)

G 01 S

The present search report has been drawn up for all claims

| Place of search | Date of completion of the search | Examiner |
|---|---|---|
| THE HAGUE | 23-11-1987 | VAN WEEL E.J.G. |

EPO FORM 1503 03.82 (P0401)